(19) Europäisches Patentamt
European Patent Office
Office européen des brevets

(11) EP 3 143 065 B1

# (12) EUROPEAN PATENT SPECIFICATION

(45) Date of publication and mention of the grant of the patent:
**10.01.2018 Bulletin 2018/02**

(21) Application number: **15719740.1**

(22) Date of filing: **07.05.2015**

(51) Int Cl.:
***C08G 18/75*** *(2006.01)* ***C08G 59/40*** *(2006.01)*
***C08G 18/00*** *(2006.01)*

(86) International application number:
**PCT/EP2015/060026**

(87) International publication number:
**WO 2015/173101 (19.11.2015 Gazette 2015/46)**

## (54) METHOD FOR THE PRODUCTION OF POLYOXAZOLIDINONE POLYMER COMPOUNDS

VERFAHREN ZUR HERSTELLUNG VON POLYOXAZOLIDINON-POLYMERVERBINDUNGEN

PROCÉDÉ POUR LA PRODUCTION DE COMPOSÉS POLYMÈRES DE POLYOXAZOLIDINONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2014 EP 14167822**

(43) Date of publication of application:
**22.03.2017 Bulletin 2017/12**

(73) Proprietor: **Covestro Deutschland AG**
**51373 Leverkusen (DE)**

(72) Inventors:
- **MÜLLER, Thomas, Ernst**
  **52074 Aachen (DE)**
- **GÜRTLER, Christoph**
  **50735 Köln (DE)**
- **BASU, Susmit**
  **52070 Aachen (DE)**
- **RANGHEARD, Claudine**
  **6211CB Maastricht (DE)**
- **WEBER, Anna**
  **50939 Köln (DE)**
- **LEITNER, Walter**
  **52074 Aachen (DE)**

(74) Representative: **Levpat**
**c/o Covestro AG**
**Gebäude 4825**
**51365 Leverkusen (DE)**

(56) References cited:
**WO-A1-86/06734 US-A1- 2012 214 958**

- **BARROS M T ET AL: "The first enantioselective [3+2] cycloaddition of epoxides to arylisocyanates: asymmetric synthesis of chiral oxazolidinone phosphonates", TETRAHEDRON ASYMMETRY, PERGAMON PRESS LTD, OXFORD, GB, vol. 21, no. 21-22, 25 November 2010 (2010-11-25), pages 2746-2752, XP027537187, ISSN: 0957-4166 [retrieved on 2010-11-25] cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a method for the production of polyoxazolidinone compounds, comprising the step of reacting an isocyanate compound, preferably a diisocyanate compound with an epoxide compound, preferably a diepoxide compound. The invention further relates to a polyoxazolidinone compound obtainable by said method, a polymeric resin obtainable by reacting a polymeric compound according to the invention with a cross linking compound and the use of a polymeric resin according to the invention as a coating, additive and composite material.

The catalytic reaction of diisocyanates with diepoxides leads to linear oligo- or polyoxazolidinones. In order for them to melt and be used as thermoplastics, the chemical conversion should have a high selectivity to the oxazolidinone.

With respect to catalysts, these are generally known for the reaction of isocyanates with epoxides. For example, the publication of H.-Y. Wu, J.-C. Ding and Y.-K. Liu, J. Indian Chem. Soc., 80, 36 (2003) discusses $SmI_3$ as a catalyst. However, this reaction is run with 10 mol-% of catalyst. The publication of M. Fujiwara, A. Baba, Y. Tomohisa and Haruo Matsuda, Chem. Lett. 1963-1966 (1986) describes a catalyst system of $Ph_4SbI$-$Bu_3SnI$. The use of organotin compounds is disadvantageous due to their toxicity. Furthermore, the catalyst concentration of 5 mol-% is rather high. As the catalyst would remain in a final polymer product, using only low amounts of catalyst is the preferred path.

US 3,471,442 is directed towards the preparation of thermoplastic polymers by heating a solution of a diepoxide monomer dissolved in an inert organic solvent at a temperature of at least 115 °C, said solvent containing a catalytic quantity of an alkali metal alkoxide. An aromatic diisocyanate is added to the aforementioned solution in small increments over a period of about one hour and heating is continued after the incremental addition of the diisocyanate has been completed until the reaction between the diepoxide and the diisocyanate is substantially completed. Thereafter, the polymeric material is separated from the solvent.

WO 86/06734 discloses a method for producing a polyoxazolidinone compound from an epoxide and an isocyanate in the presence of an organoantimony iodide. The reaction can be run batch-wise or continuously.

US 2010/227090 discloses a method for producing a polyoxazolidinone from an epoxide and an isocyanate. The reaction is catalysed by 2-phenyl imidazole.

US 3,020,262 discloses a method for producing 2-oxazolidinones from epoxides and isocyanates in the presence of trialkylamines, alkali metal halides and ammonium halides.

WO 86/06734 A1 discloses a process for the preparation of polyisocyanurate-based polyoxazolidinone polymers containing relatively small proportions of trimerised polyisocyanates. The amount of isocyanurate compounds is below 15 mol-%. The catalysts used are organoantimony iodide salts. The regioselectivity of the reaction is not discussed.

The article by M. T. Barros et. al. in Tetrahedron: Asymmetry 21 (2010) 2746 describes the enantioselective synthesis of oxazolidinone phosphonates from 1-2 oxiranephosphonates and arylisocyanates. The reactions are carried out at room temperature. Different Lewis acids, especially lanthanide cations, are used as catalysts. Chiral information is induced by Pybox ligands. The regioselectivity of the reaction is up to 95%.

US 2012/0214958 A1 discloses a method for preparing an epoxy oxazolidinone from divinylarenedioxides and polyisocyanates. The prepared epoxy-oxazolidinones show a relatively low viscosity above the glass transition temperature and can be used as epoxy resins. The reaction is carried out at 180°C. When tetrabutylphosphonium bromide is used, the selectivity to oxazolidinone is 86%. The regioselectivity of the reaction is not discussed.

Unpublished European Patent Application No. 12192611.7 relates to a method for the production of oxazolidinone compounds, comprising the step of reacting an isocyanate compound with an epoxide compound in the presence of a Lewis acid catalyst. An antimony catalyst ($Ph_4SbBr$) was used as Lewis acidic catalyst, which has certain toxicity. The catalysts used in the examples are $SmI_3$, LiBr, $Ph_4SbBr$ $Ph_4PBr$.

None of the above cited documents deals with the high regioselectivity towards the 5-substituted 1,3-oxazolidin-2-one isomer within the repetition units in the polymer and the thereto related advantageously physical and mechanical properties such as reduced viscosity or glass transition temperature of the resulting polymers.

The object of the present invention was therefore to identify reaction conditions, which lead to polyoxazolidinones with a high selectivity and a high regioselectivity towards the 5-substituted 1,3-oxazolidin-2-one isomer within the repetition units in the polymer.

Surprisingly this object has been achieved by a method for the production of polyoxazolidinone compounds, comprising the step of reacting an isocyanate compound, preferably a diisocyanate compounds, with an epoxide compound, preferably a diepoxide compound, in the presence of a catalyst, characterized in that the catalyst having the general formula (I)

$$[E(R1)(R2)(R3)(R4)]^{+}{}_{n}X^{n-} \qquad (I)$$

wherein:

E is P, As, Sb and/or Bi,

n is 1, 2 or 3

in the case of n = 1, $X^-$ is $F^-$, $Cl^-$, $OH^-$, $CH_3CO_2^-$, $NO_2^-$, $NO_3^-$, $ClO^-$, $ClO_2^-$, $ClO_3^-$, $ClO_4^-$, $OR^-$, wherein R is a linear or branched alkyl group comprising 1 to 22 carbon atoms, a cycloaliphatic group comprising 3 to 22 carbon atoms or an aryl group comprising 6 to 18 carbon atoms, $N_3^-$, $NH_2^-$ and/or $SCN^-$,
in the case of n = 2, $X^{2-}$ is $SO_4^{2-}$, $CO_3^{2-}$ and/or $S_2O_3^{2-}$,
in the case of n = 3, $X^{3-}$ is $PO_4^{3-}$

(R1), (R2), (R3), (R4) are independently of one another selected from the group comprising linear or branched alkyl groups comprising 1 to 22 carbon atoms, optionally substituted with heteroatoms and/or heteroatom comprising substituents, cycloaliphatic groups comprising 3 to 22 carbon atoms, optionally substituted with heteroatoms and/or heteroatom comprising substituents, C1 to C3 alkyl-bridged cycloaliphatic groups comprising 3 to 22 carbon atoms, optionally substituted with heteroatoms and/or heteroatom comprising substituents and aryl groups comprising 6 to 18 carbon atoms, optionally substituted with alkyl groups comprising 1 to 10 carbon atoms and/or heteroatoms.

The method according to the invention has the advantage of synthesising oligomeric and/or polymeric oxazolidinones with a high regioselectivity towards the 5-substituted 1,3-oxazolidin-2-one isomer, in the following also named as 5-OXA, within the repetition units in the polymer and/or oligomer. The resulting polyoxazolidinones exhibit lower viscosities and lower glass transition temperatures compared to those polyoxazolidinones wherein the 5-OXA isomer is prepared with a lower regioselectivity.
In the cycloaddition reaction of an isocyanate compound with an epoxide compound, the two different regioisomers of the 5-substituted 1,3-oxazolidin-2-one (5-OXA), as shown in formula IIa, and the 4-substituted 1,3-oxazolidin-2-one (4-OXA), as shown in formula IIb, are formed.

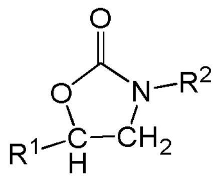

IIa

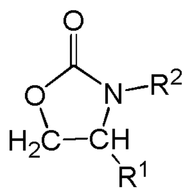

IIb

The regioselectivity between the two regioisomers is determined during opening of the epoxide ring in the presence of the catalyst. Both of these two regioisomers can be identified and quantified by looking into the $^1$H-NMR spectral pattern for the characteristic proton signals associated with the methine and methylene protons of the heterocyclic oxazolidinone ring fragments and the methylene and methine protons of the epoxide end group.
Without wishing to be bound by theory, it is believed that the regioselectivity of the oxazolidinone formation can be influenced through the hardness of the used anion of the catalyst. The use of a Lewis-base that is considered harder than a bromide anion, will lead to a higher selectivity towards the 5-OXA regioisomer compared to a bromide anion. The definition of hardness hereby can be taken from the publication of Robert G. Parr and Ralph G. Pearson (J. Am. Chem. Soc. 1983, 105, 7512-7516). A quantitative definition of the chemical hardness $\eta$ may be given as the average of ionization energy (I) and electron affinity (A) of the given ion.
As used herein the term "polyoxazolidinone compound" or "polymeric oxazolidinone compound" is meant to include polyoxazolidinone compounds with at least 2, preferably at least 4 oxazolidinone moieties in the molecule obtainable by the reaction of isocyanate compounds with epoxide compounds.
As used herein, the term "isocyanate compound" is meant to denote polyisocyanate compounds having two or more NCO groups, NCO-terminated biurets, NCO-terminated isocyanurates, NCO-terminated uretdiones, NCO-terminated carbamates and NCO-terminated prepolymers with two or more NCO groups. Examples are linear or branched aliphatic compounds having 1 to 22 carbon atoms, optionally comprising a heteroatom or a heteroatom comprising substituent, cycloaliphatic compounds having 5 to 22 carbon atoms, optionally comprising a heteroatom or a heteroatom comprising substituent, and/or aromatic compounds having 6 to 18 carbon atoms, optionally comprising a heteroatom or a heteroatom comprising substituent and having two or more isocyanate groups.
Preferably isocyanate compounds having two isocyanate groups (diisocyanates) are used such as tetramethylene diisocyanate, pentamethylene diisocyanate, hexamethylene diisocyanate (HDI), 2-methylpentamethylene diisocyanate, 2,2,4-trimethyl-hexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate, IPDI), diisocyanatodicyclohexylmethane ($H_{12}$-MDI), 4,4'-diisocyanato-3,3'-dimethyldicyclohexylmethane, 4,4'-diisocyanato-2,2-dicyclohexylpropane, poly(hexamethylene diisocyanate), octamethylene diisocyanate, tolyene-α,4-diisocyanate, poly(propylene glycol) tolylene-2,4-diisocyanate terminated, poly(ethylene adipate) tolylene-2,4-diisocyanate terminated, 2,4,6-trimethyl-1,3-phenylene diisocyanate, 4-chloro-6-methyl-1,3-phenylene diisocyanate, poly[1,4-phenylene diisocyanate-co-poly(1,4-butanediol)] diisocyanate, poly(tetrafluoroethylene oxide-co-difluoromethylene oxide) α,ω-diisocyanate, 1,4-diisocyanatobutane, 1,8-diisocyanatooctane, 1,3-bis(1-isocyanato-1-methylethyl)benzene, 3,3'-dimethyl-4,4'-biphenylene diisocyanate, naphthalene- 1,5-diisocyanate, 1,3-phenylene diisocyanate, 1,4-diisocyanatobenzene, 2,4- or 2,5- or 2,6-diisocyanatotoluene (TDI) or mixtures of these isomers, 4,4'-, 2,4'- or 2,2'-diisocyanatodiphenylmethane (MDI) or mixtures of these isomers, 4,4'-, 2,4'- or 2,2'-diisocyanato-2,2-diphenylpropane-p-xylene diisocyanate and α,α,α',α'-tetramethyl-m- or -p-xylene diisocyanate (TMXDI), mixtures thereof or biurets, isocyanurates, carbamates or uretdiones of the aforementioned isocyanates. Particularly preferred are hexamethylene diisocyanate (HDI), 3-isocyanatomethyl-3,3,5-trimethylcyclohexyl isocyanate (isophorone diisocyanate, IPDI), diisocyanatodicyclohexylmethane ($H_{12}$-MDI), diphenylmethane diisocyanate (MDI), 2,4- or 2,5- or 2,6-diisocyanatotoluene (TDI) or mixtures of these isomers, 4,4'-, 2,4'- or 2,2'-diisocyanatodiphenylmethane (MDI) or mixtures of these isomers.

A mixture of two or more of the aforementioned isocyanate compounds can also be used.

As used herein, the term "epoxide compound" is meant to denote epoxide compounds having two or more epoxide groups. Examples are butadiene diepoxide, vinylcyclohexene diepoxide, limonene diepoxide, the diepoxides of double unsaturated fatty acid C1 - C18 alkyl esters, ethylene glycol diglycidyl ether, diethylene glycol diglycidyl ether, poly(ethylene glycol) diglycidyl ether, propylene glycol diglycidyl ether, dipropylene glycol diglycidyl ether, poly(propylene glycol) diglycidyl ether, neopentyl glycol diglycidyl ether, polybutadiene diglycidyl ether, 1,6-hexanediol diglycidyl ether, hydrogenated bisphenol-A diglycidyl ether, 1,2-dihydroxybenzene diglycidyl ether, resorcinol diglycidyl ether, 1,4-dihydroxybenzene diglycidyl ether, bisphenol-A diglycidyl ether, diglycidyl ethers of polybutadiene - bisphenol-A - block-copolymers, diglycidyl *o*-phthalate, diglycidyl isophthalate, diglycidyl terephthalate, glycerol polyglycidyl ether, trimethylolpropane polyglycidyl ether, pentaerythritol polyglycidyl ether, diglycerol polyglycidyl ether, polyglycerol polyglycidyl ether and/or sorbitol polyglycidyl ether.

Preferably epoxide compounds having two epoxide groups are used, for example butadiene diepoxide, vinylcyclohexene diepoxide, limonene diepoxide, the diepoxides of double unsaturated fatty acid C1 - C18 alkyl esters, ethylene glycol diglycidyl ether, diethylene glycol diglycidyl ether, poly(ethylene glycol) diglycidyl ether, propylene glycol diglycidyl ether, dipropylene glycol diglycidyl ether, poly(propylene glycol) diglycidyl ether, neopentyl glycol diglycidyl ether, polybutadiene diglycidyl ether, 1,6-hexanediol diglycidyl ether, hydrogenated bisphenol-A diglycidyl ether, 1,2-dihydroxybenzene diglycidyl ether, resorcinol diglycidyl ether, 1,4-dihydroxybenzene diglycidyl ether, bisphenol-A diglycidyl ether, diglycidyl ethers of polybutadiene - bisphenol-A - block-copolymers, diglycidyl *o*-phthalate,diglycidyl isophthalate, diglycidyl terephthalate, particularly preferred are butadiene diepoxide, the diepoxides of double unsaturated fatty acid C1 - C18 alkyl esters, ethylene glycol diglycidyl ether, diethylene glycol diglycidyl ether, poly(ethylene glycol) diglycidyl ether, propylene glycol diglycidyl ether, dipropylene glycol diglycidyl ether, poly(propylene glycol) diglycidyl ether, neopentyl glycol diglycidyl ether, 1,6-hexanediol diglycidyl ether, hydrogenated bisphenol-A diglycidyl ether, 1,2-dihydroxybenzene diglycidyl ether, resorcinol diglycidyl ether, 1,4-dihydroxybenzene diglycidyl ether, bisphenol-A diglycidyl ether, diglycidyl *o*-phthalate,diglycidyl isophthalate, diglycidyl terephthalate.

A mixture of two or more of the aforementioned epoxide compounds can also be used.

In one embodiment of the invention, the method is performed in the presence of a catalyst according to formula (I)

$$[E(R1)(R2)(R3)(R4)]^{+}{}_{n}X^{n-} \qquad (I)$$

wherein

E is a P, As, Sb and/or Bi, preferably P or Sb,
n is 1, 2 or 3, preferably 1 or 2

in the case of n = 1, $X^-$ is $F^-$, $Cl^-$, $OH^-$, $CH_3CO_2^-$, $NO_2^-$, $NO_3^-$, $ClO^-$, $ClO_2^-$, $ClO_3^-$, $ClO_4^-$, $OR^-$, wherein R is an linear or branched alkylgroup comprising 1 to 22 carbon atoms, a cycloaliphatic group comprising 3 to 22 carbon atoms or an aryl group comprising 6 to 18 carbon atoms, $N_3^-$, $NH_2^-$ and/or $SCN^-$, preferably $Cl^-$, $NO3^-$
in the case of n = 2, $X^{2-}$ is $SO_4^{2-}$, $CO_3^{2-}$ and/or $S_2O_3^{2-}$, preferably $CO_3^{2-}$
in the case of n = 3, $X^{3-}$ is $PO_4^{3-}$,

(R1), (R2), (R3), (R4) are independently of one another selected from the group comprising linear or branched alkyl groups comprising 1 to 22 carbon atoms, optionally substituted with heteroatoms and/or heteroatom comprising substituents cycloaliphatic groups comprising 3 to 22 carbon atoms, optionally substituted with heteroatoms and/or heteroatom comprising substituents, C1 to C3 alkyl-bridged cycloaliphatic groups comprising 3 to 22 carbon atoms, optionally substituted with heteroatoms and/or heteroatom containing substituents and aryl groups comprising 6 to

18 carbon atoms, optionally substituted with alkyl groups comprising 1 to 10 carbon atoms and/or heteroatoms.

(R1), (R2), (R3), (R4) of formula (I) independently of one another are for example linear or branched alkyl groups containing 1 to 6 carbon atoms (such as methyl, ethyl, n-propyl, i-propyl, t-butyl, i-butyl, sec-butyl, n-pentyl, iso-pentyl, neo-pentyl, n-hexyl, 2-hexyl, 3-hexyl), cyclopentyl, cyclohexyl, cycloheptyl, cyclooctyl, $CH_2$-hexyl, $CH_2$-adamantyl, $CH_2$-cyclopentane, $CH_2$-cycloheptane, $CH_2$-bicylclo[2.2.2]octane, phenyl, *ortho-, meta-, para-tolyl,* benzyl-2-methoxyphenyl, 4-methoxyphenyl, 2-ethoxyphenyl, 4-ethoxyphenyl, 2-(N,N-dimethylamino)phenyl, 4-(N,N-dimethylamino)phenyl, 2-(N,N-diethylamino)-phenyl, 4-(N,N-diethylamino)-phenyl, 2-(methylthio)-phenyl, 4-(methylthio)-phenyl, 2-(ethylthio)-phenyl, 4-(ethylthio)-phenyl, 2-isopropoxyphenyl, 4- isopropoxyphenyl, 2-propoxyphenyl, 4- propoxyphenyl, 4-(N-pyrrolidyl)-phenyl, 2-(N,N-ethylmethylamino)-phenyl, 2-methyl-5-(methylthio)-1,3-thiazol-4-yl, 3,3,3-trichloropropyl, (2,2-dimethyl-propionylamino)-methyl, 1H-benzoimidazol-2-ylmethyl, (4-methoxyphenoxy)methyl, phenantrenyl, 2-pyridylmethyl, 4-pyridylmethyl, 4-methoxy-3,6-dioxo-cyclohexa-1,4-dienylmethyl, 2,2-dichloro-1-(2-fluoro-acetylamino)-vinyl, 2,2-dichloro-1-(4-fluoro-benzylamino)-vinyl, 2-(4-Cl-Ph)-1-(5-phenyl-tetrazole-1-yl)-vinyl, 2-anilino-5-(4-morpholinyl)-1,3-oxazol-4-yl, 3-(benzylsulfanyl)-1-(4-methylphenyl)pyrimido, [1,6-A]benzimodayol-4-yl, 2-phenyl-5-p-tolylamino-oxazol-4-yl, 2-oxo-propyl.

Preferably (R1), (R2), (R3), (R4) independently of one another are selected from the group comprising linear or branched alkyl groups containing 1 to 6 carbon atoms (such as methyl, ethyl, n-propyl, i-propyl, t-butyl, i-butyl, sec-butyl, n-pentyl, iso-pentyl, neo-pentyl, n-hexyl, 2-hexyl, 3-hexyl), cyclohexyl, and/or phenyl.

In another embodiment of the invention a catalyst according to formula (I) is present,

wherein E is P,
n is 1, 2 or 3, preferably 1 or 2
in the case of n = 1, $X^-$ is $F^-$, $Cl^-$, $OH^-$, $CH_3CO_2^-$, $NO_2^-$, $NO_3^-$, $ClO^-$, $ClO_2^-$, $ClO_3^-$, $ClO_4^-$, $OR^-$, wherein R is an linear or branched alkyl group comprising 1 to 22 carbon atoms, a cycloaliphatic group comprising 3 to 22 carbon atoms or an aryl group comprising 6 to 18 carbon atoms, $N_3^-$, $NH_2^-$ and/or $SCN^-$, preferably $Cl^-$, $NO_3^-$
in the case of n = 2, $X^{2-}$ is $SO_4^{2-}$, $CO_3^{2-}$ and/or $S_2O_3^{2-}$ , preferably $CO_3^{2-}$
in the case of n = 3, $X^{3-}$ is $PO_4^{3-}$,
(R1), (R2), (R3), (R4) are independently of one another selected from the group comprising linear or branched alkyl groups comprising 1 to 22 carbon atoms, optionally substituted with heteroatoms and/or heteroatom comprising substituents cycloaliphatic groups comprising 3 to 22 carbon atoms, optionally substituted with heteroatoms and/or heteroatom comprising substituents, C1 to C3 alkyl-bridged cycloaliphatic groups comprising 3 to 22 carbon atoms, optionally substituted with heteroatoms and/or heteroatom containing substituents and aryl groups comprising 6 to 18 carbon atoms, optionally substituted with alkyl groups comprising 1 to 10 carbon atoms and/or heteroatoms, preferably linear or branched alkyl groups containing 1 to 6 carbon atoms (such as methyl, ethyl, n-propyl, i-propyl, t-butyl, i-butyl, sec-butyl, n-pentyl, iso-pentyl, neo-pentyl, n-hexyl, 2-hexyl, 3-hexyl), cyclohexyl, and/or phenyl.

In another embodiment of the invention a catalyst according to formula (I) is present,

wherein E is P,
n is 1, and $X^-$ is $Cl^-$,
(R1), (R2), (R3), (R4) are independently of one another selected from the group comprising linear or branched alkyl groups comprising 1 to 22 carbon atoms, optionally substituted with heteroatoms and/or heteroatom comprising substituents cycloaliphatic groups comprising 3 to 22 carbon atoms, optionally substituted with heteroatoms and/or heteroatom comprising substituents, C1 to C3 alkyl-bridged cycloaliphatic groups comprising 3 to 22 carbon atoms, optionally substituted with heteroatoms and/or heteroatom containing substituents and aryl groups comprising 6 to 18 carbon atoms, optionally substituted with alkyl groups comprising 1 to 10 carbon atoms and/or heteroatoms, preferably linear or branched alkyl groups containing 1 to 6 carbon atoms (such as methyl, ethyl, n-propyl, i-propyl, t-butyl, i-butyl, sec-butyl, n-pentyl, iso-pentyl, neo-pentyl, n-hexyl, 2-hexyl, 3-hexyl), cyclohexyl, and/or phenyl.

In another embodiment in combination of all aforementioned embodiments, a catalyst according to formula (I) is present wherein (R1), (R2), (R3), (R4) are equal and selected from the group comprising linear or branched alkyl groups comprising 1 to 22 carbon atoms, optionally substituted with heteroatoms and/or heteroatom comprising substituents cycloaliphatic groups comprising 3 to 22 carbon atoms, optionally substituted with heteroatoms and/or heteroatom comprising substituents, C1 to C3 alkyl-bridged cycloaliphatic groups comprising 3 to 22 carbon atoms, optionally substituted with heteroatoms and/or heteroatom comprising substituents and aryl groups comprising 6 to 18 carbon atoms, optionally substituted with alkyl groups comprising 1 to 10 carbon atoms and/or heteroatoms, preferably selected from the group comprising phenyl, cyclohexyl and/or linear or branched alkyl groups comprising 1 to 6 carbon atoms, (such as methyl, ethyl, n-propyl, i-propyl, t-butyl, i-butyl, sec-butyl, n-pentyl, iso-pentyl, neo-pentyl, n-hexyl, 2-hexyl, 3-hexyl).

Suitable solvents are high-boiling non-protic solvents such as *N*-methylpyrrolidone (NMP), *N*-ethylpyrrolidone, cyclic ethylene carbonate, cyclic propylene carbonate, sulfolane, chlorobenzene, the different isomers of dichlorobenzene, the different isomers of trichlorobenzene, decalin, hexamethylphosphoramide, dimethylformamide, dimethyl sulfoxide, dimethylacetamide (DMAc) or mixtures of one or more of the aforementioned solvents among each other or with further non-protic solvents. Preferred solvents are NMP, sulfolane and/or DMAc.

In another embodiment of the method according to the invention, the reaction is conducted in the absence of a solvent. This avoids side reactions such as chain termination reactions by solvent molecules. Preferably, the reaction mixture only contains the epoxy compound(s), the isocyanate compound(s) and the catalyst(s), the latter together with their counter-ions as well as the oxazolidinone compound.

In another embodiment of the method according to the invention the isocyanate compound is added in a continuous or step-wise manner with two or more individual addition steps in the stepwise addition, wherein in each individual addition step the amount of isocyanate compound added is $\leq$ 50 weight-%, preferably $\leq$ 10 weight-% and particularly preferred $\leq$ 5 weight-% of the total amount of isocyanate compound to be added. This is to be understood in such a way that during the course of the reaction the isocyanate compound is added to the reaction mixture containing the epoxide compound continuously or in the aforementioned step-wise manner. Included is also the case that the isocyanate compound is added *via* a syringe pump, dripping funnel or other continuous or semi-continuous devices where the isocyanate is brought into the reaction mixture. Although some after-reaction time may be given to the reaction system, the reaction should be essentially complete shortly after the end of the addition of the isocyanate compound.

By way of process criteria, one could establish a condition that 30 minutes, preferably 20 minutes and more preferred 10 minutes after the end of the isocyanate addition no more change in the NCO group content of the reaction mixture takes place (within the boundaries of experimental uncertainty). This may be observed, for example, by *in-situ* IR spectroscopy or analysis of samples of the reaction mixture concerning their NCO content, for example, by titration according to DIN ISO 10283.

In one embodiment of the method according to the invention, the isocyanate compound is added continuously to the reaction mixture. "Continuously" in the meaning of the invention means that the isocyanate compound is added to the reaction mixture over a defined period of time, while at the same time any isocyanate compound present in the reaction mixture is converted to the oxazolidinone compound. Preferably, the rate of isocyanate addition is smaller than or equal to the maximum rate, with which the isocyanate compound can be converted under these reaction conditions to the oxazolidinone compound in order to avoid accumulation of NCO groups in the reaction mixture. The actual concentration of NCO groups in the reaction mixture may be observed, for example, by *in-situ* IR spectroscopy. If the NCO group concentration is observed to increase above a set value, the rate of isocyanate addition is reduced. Preferably, the isocyanate compound is added to the reaction mixture (consisting of epoxide compound, isocyanate compound, catalyst and oxazolidinone compound, but not considering solvent, if present) with such an addition rate to the reaction mixture that the concentration of the isocyanate compound in the reaction mixture is $\leq$ 40 weight-%, preferably $\leq$ 20 weight-% and more preferred $\leq$ 15 weight-%.

In another embodiment of the invention the amount of isocyanate compound added in each individual addition step is $\geq$ 0.1 weight-% to $\leq$ 50 weight-% of the total amount of isocyanate compound to be added. Preferably, the amount of isocyanate compound added per individual addition step is $\geq$ 1.0 weight-% to $\leq$ 40 weight-% of, more preferred $\geq$ 5.0 weight-% to $\leq$ 15 weight-% of the total amount of isocyanate compound to be added. Preferably, the time intervals between each individual addition of isocyanate compound to the reaction mixture (consisting of epoxide compound, isocyanate compound, catalyst and oxazolidinone compound, but not considering solvent, if present) is chosen in such a way that the concentration of the isocyanate compound in the reaction mixture at any given point in time is $\leq$ 20 weight-%, preferably $\leq$ 5 weight-% and more preferred $\leq$ 1 weight-%. The actual concentration of NCO groups in the reaction mixture may be observed, for example, by *in-situ* IR spectroscopy. If the NCO group concentration is observed to increase above a set value, the time interval between the addition steps is increased.

In another embodiment of the invention, the isocyanate compound is a compound with two NCO groups per molecule, preferably hexamethylene diisocyanate (HDI), 3-isocyanatomethyl-3,3,5-trimethylcyclohexyl isocyanate (isophorone diisocyanate, IPDI), diisocyanatodicyclohexylmethane ($H_{12}$-MDI), diphenylmethane diisocyanate (MDI), 2,4- or 2,5- or 2,6-diisocyanatotoluene (TDI) or mixtures of these isomers, 4,4'-, 2,4'- or 2,2'-diisocyanatodiphenylmethane (MDI) or mixtures of these isomers, and the epoxide compound is a compound with two epoxide groups per molecule, preferably butadiene diepoxide, the diepoxides of double unsaturated fatty acid C1 - C18 alkyl esters, ethylene glycol diglycidyl ether, diethylene glycol diglycidyl ether, poly(ethylene glycol) diglycidyl ether, propylene glycol diglycidyl ether, dipropylene glycol diglycidyl ether, poly(propylene glycol) diglycidyl ether, neopentyl glycol diglycidyl ether, 1,6-hexanediol diglycidyl ether, hydrogenated bisphenol-A diglycidyl ether, 1,2-dihydroxybenzene diglycidyl ether, resorcinol diglycidyl ether, 1,4-dihydroxybenzene diglycidyl ether, bisphenol-A diglycidyl ether, diglycidyl *o*-phthalate,diglycidyl isophthalate, diglycidyl terephthalate.

The method according to the invention can be performed at temperatures of $\geq$ 140 °C to $\leq$ 300 °C, preferably

at a temperature of ≥ 150 °C to ≤ 280 °C, most preferred at a temperature of ≥ 160 °C to ≤ 260 °C with or without a solvent.

In another embodiment of the method according to the invention, the catalyst is present in an amount of ≥ 0.001 mol-% to ≤ 0.1 mol-% based on the total amount of substrate. Preferably, the catalyst is present in an amount of ≥ 0.001 mol-% to ≤ 0.05 mol-%, more preferred ≥ 0.01 mol-% to ≤ 0.025 mol-%.

In another embodiment of the method according to the invention, the reaction is conducted in the molar ratio of the epoxide groups to the isocyanate groups of 0.5 to 1.5, preferably 0.8 to 1.2, particularly preferred 0.95 to 1.05. The chain length for the polymers can be controlled by changing the ratio between the polyepoxide and the polyisocyanate compound. An epoxide terminated polymer is obtained, when the polyepoxide is employed in excess. An isocyanate terminated polymer is obtained, when the polyisocyanate is employed in excess. Linear polymer chains with high molecular weight are obtained, when equimolar amounts of diepoxide and diisocyanate are reacted with each other. The precise content of epoxide and isocyanate groups in the diepoxide and diisocyanate, respectively, are preferentially determined before the polymerisation reaction, e.g., by measuring the epoxide number according to German standard norm DIN EN 1877-1 and the isocyanate number according to German standard norm DIN EN ISO 11909.

The present invention is further related to the polyoxazolidinone compounds obtainable by the method according to the invention. The resulting polyoxazolidinone compound, exhibits a molar ratio of the 5-substituted 1,3-oxazolidin-2-one (5-OXA) to the 4-substituted 1,3-oxazolidin-2-one (4-OXA) ≥ 85/15, preferably ≥ 90/10, particularly preferred ≥ 96/4.

In one embodiment of the invention, the polyoxazolidinone compound exhibits the following viscosities within a certain range of the number average molecular weight ($M_n$):

| $M_n$ ranges [g/mol] | Viscosity at 25 °C [Pa*s] |
|---|---|
| ≥ 10000 to < 30000 | < 75, preferably < 55 |
| ≥ 30000 to < 60000 | < 100, preferably < 80 |

The number average molecular weight ($M_n$) of the polyoxazolidinone compound is determined according to proton NMR spectroscopy and the viscosity at 25 °C is determined according to DIN EN ISO 17025.

In another embodiment of the invention, the polyoxazolidinone compound exhibits the following glass transition temperatures ($T_g$) within a certain range of the number average molecular weight ($M_n$):

| $M_n$ ranges [g/mol] | $T_g$ [°C] |
|---|---|
| ≥ 10000 to ≤ 30000 | ≤ -23, preferably ≤ -30 |
| ≥ 30000 to < 60000 | ≤ -19, preferably ≤ -23 |
| ≥ 60000 to ≤ 120000 | ≤ 55, preferably ≤ 49 |

The number average molecular weight ($M_n$) is determined according to proton NMR spectroscopy and the glass transition temperature ($T_g$) of the compound, determined as described below at a heating rate of 10 K/min.

The present invention is further related a polymeric resin obtainable by reacting a polymeric compound according to the invention with a cross linking compound such as polyols or polyamines.

Polyoxazolidinones obtained by the method according to the invention are particularly suited as thermoplastic materials and/or polymer building blocks in polyurethane chemistry. For example, epoxy-terminated oligomeric oxazolidinones (oligooxazolidinones) may be reacted with their NCO-terminated counterparts to form high molecular weight polyoxazolidinones, which are useful as transparent, high temperature-stable materials.

## Examples

BADGE: Diepoxide, 4,4'-isopropylidenediphenol diglycidyl ether *(bisphenol-A diglycidyl ether),* purity +99 %, Momentive, Germany. 4,4'-Methylenebis(cyclohexyl isocyanate): diisocyanate, Bayer MaterialScience AG, Germany 2,4-Toluenediisoyanate. Diisocyanate, >99% 2,4-isomer, Bayer MaterialScience AG, Germany *para*-Pentylphenyl isocyanate: Monoisocyanate, purity > 99 %; obtained by reaction of *para*-pentylaniline with phosgene.

| | |
|---|---|
| $[PPh_4]Br$ | purchased from Aldrich, Germany |
| $[P(n\text{-}Bu)_4]Br$ | purchased from Aldrich, Germany |
| $[P(n\text{-}Bu)_4]Cl$ | purchased from Aldrich, Germany |

$[PPh_4]_2CO_3$ obtained by the following procedure: A mixture of silver carbonate (0.5 g, 1.81 mmol) and methanol (100 mL) was stirred under complete darkness for 1 h at 25 °C, whereupon a partial dissolution of the solid occurred. The clear, overstanding solution was then added dropwise to a solution of tetraphenylphosphonium bromide (1.52 g, 3.62 mmol) in methanol (4 mL) and the resulting mixture stirred in darkness at 25 °C for 3 h. After resting for 16 h, a yellow precipitate had formed, which was removed by filtration. The volatile components of the filtrated solution were then removed by evaporation under reduced pressure to give 1.45 g of a colourless solid.

The 300 ml pressurized reactor used in the Examples had a height (internal) of 10.16 cm and an internal diameter of 6.35 cm. The reactor was fitted with an electric heating jacket (510 watt maximum heating capacity). The counter cooling consisted of a U-shaped dip tube of external diameter 6 mm which projected into the reactor to within 5 mm of the bottom and through which cooling water at approx. 10°C was passed. The water stream was switched on and off by means of a solenoid valve. The reactor was also fitted with an inlet tube and a temperature probe of diameter 1.6 mm, both of which projected into the reactor to within 3 mm of the bottom. The impeller agitator used in the Examples was a pitched-blade turbine in which a total of two agitator stages, each with four agitator blades (45°) of diameter 35 mm and height 10 mm, were attached to the agitator shaft at a distance of 7 mm.

The viscosity and the molecular weight were determined on an Anton Paar Physica MCR 501 rheometer equipped with a D-CP/PP 7 (25 mm Plate-Plate) measuring system. The shear rate was increased from 0.01 to 1000 1/s in 60 increments, whereby a constant shear rate was applied for 10 seconds each. The viscosity was calculated as the average of the 60 measurements. Further, the two shear force parameters, the storage modulus (G') and the loss modulus (G") were measured. For calculation of the molecular weight distribution, polystyrene was used as internal standard. The data measured were processed using Rheoplus version 3.40 software.

The stability of the polyoxazolidinones was characterised by thermogravimetric analysis (TGA). The measurements were performed on a Mettler Toledo TGA/DSC 1. The sample (6 to 20 mg) was heated from 25 °C to 400 °C with a heating rate of 10 K/min and the relative weight loss followed in dependence of temperature. For data analysis the software STARe SW 11.00 was used. As decomposition temperature the inflection point of the sinuidal weight loss curve is stated.

The glass transition point ($T_g$) was recorded on a Mettler Toledo DSC 1. The sample (4 to 10 mg) was heated from -50°C to 150 °C with a heating rate of 10 K/min. For data analysis the software STARe SW 11.00 was used. For determination of the glass transition temperature a tangential analysis method was used. The midpoint of the intersection point between the tangent in the middle with the tangent at low temperature and the intersection point between the tangent in the middle with the tangent at low temperature is stated.

The solid state IR analysis was performed on a Bruker ALPHA-P IR spectrometer equipped with a diamond probe head. Before obtaining the IR spectrum of the sample, a background spectrum was recorded against ambient air. After that, a small sample (several milligrams) of the prepolymer sample was applied to diamond probe and the IR spectrum recorded on a computer connected with the spectrometer using OPUS 6.5 software averaging over 32 spectra obtained in the range of 4000 to 400 $cm^{-1}$ with a resolution of 4 $cm^{-1}$.

In the cycloaddition reaction, two different regioisomers, the 5-substituted 1,3-oxazolidin-2-one (5-OXA), as shown in formula IIa, and the 4-substituted 1,3-oxazolidin-2-one (4-OXA), as shown in formula IIb, are formed. The ratio of the two regioisomers was determined by $^1$H-NMR spectroscopy.

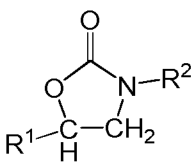

(IIa)

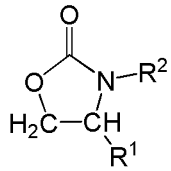

(IIb)

$^1$H NMR spectroscopy: Measurements were performed on the instrument Bruker AV400 (400 MHz) or Bruker AV600 (600 MHz) by the company Bruker. Chemical shifts $\delta$ (given in parts per million, ppm) were reported relative to the residual proton signal of the solvent (dmso-$d^6$, $\delta$ = 2.50 ppm, or $CDCl_3$, $\delta$ = 7.26 ppm).

The two regioisomers were identified by the characteristic proton signals associated with the methine and methylene protons of the heterocyclic oxazolidinone ring fragments. The regioselectivity $R_{5\text{-}OXA}$ was quantified from the intensities of the corresponding signals as specified below.

In all examples isocyanate compound is added with a constant rate (continuously, semi-batch) over the specified period of time.

The average chain length of the polyoxazolidinones was adjusted by the relative molar ratio of the diisocyanate and diepoxide used in the particular reaction.

When an isocyanate terminated polyoxazolidinone is desired, the diisocyanate is used in excess. Equation 1 (eq. 1) below gives a general mathematical formula to calculate the average chain length m in the oligomeric and/or polymeric product based on the molar ratios of diisocyanate and diepoxide compound employed.

$$m = 1 / [\{(\text{amount of isocyanate in mol}) / (\text{amount of epoxide in mol})\} - 1] \qquad (\text{eq. 1})$$

When an epoxide terminated polyoxazolidinone is desired, the diepoxide is used in excess. Equation 2 (eq. 2) below gives a general mathematical formula to calculate the average chain length m in the oligomeric and/or polymeric product based on the molar ratios of diisocyanate and diepoxide compound employed.

$$\text{m} = 1 / [\{(\text{amount of epoxide in mol}) / (\text{amount of isocyanate in mol})\} - 1] \qquad (\text{eq. 2})$$

The ratio of the two regioisomers in the polyoxazolidinone product was determined by $^1$H NMR spectroscopy. Both two regioisomers were identified by the characteristic proton signals in the $^1$H NMR spectra associated with the methine and methylene protons of the heterocyclic oxazolidinone ring fragments and the methylene and methine protons of the epoxide end group. The molecular weight and the number of repeating units in the polyoxazolidinone were calculated by end-group analysis based on $^1$H-NMR spectroscopy. A sample of the polymer was dissolved in deuterated chloroform and the NMR spectrum recorded on a Bruker spectrometer (AV400, 400 MHz). All polymers were epoxide terminated as was confirmed by the presence of the characteristic epoxide proton signals in the $^1$H NMR analysis of the reaction mixture.

*Reaction of 4,4'-Isopropylidenediphenol diglycidyl ether (BADGE) with 4,4'-Methylenebis(cyclohexyl isocyanate)*

A representative example of the polyoxazolidinone structure is represented by the formula (III) shown below. The formula weight (FW) of the end-groups and the repeating unit is given, based on which the average molecular weight and chain length was estimated.

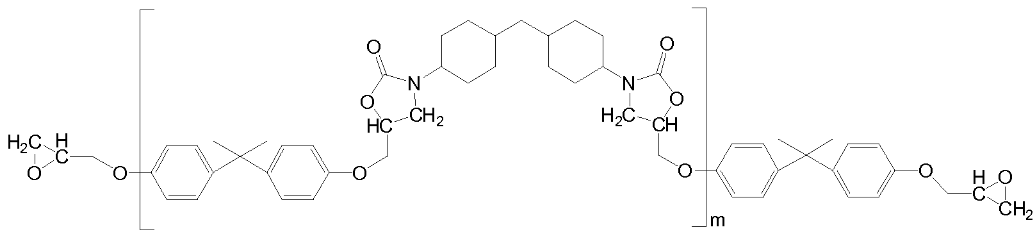

$(CH_2OCH)(CH_2O)$ - $[(C_6H_4)(C(CH_3)_2)(C_6H_4)(OCH_2)\{CHOC(=O)NCH_2\}(C_6H_{10})(CH_2)(C_6H_{10})\{NC(=O)OCHCH_2\}(CH_2O)]_n$ - $(C_6H_4)(C(CH_3)_2)(C_6H_4)(OCH_2)(CHOCH_2)$

FW = 73 $(602)_n$ 267

(III)

The relevant resonances in the $^1$H-NMR spectra (relative to TMS = 0 ppm), which were used for integration are as follows:

11-1: 2.7 ppm: methylene group of epoxide end group; resonance area corresponds to one H atom
11-2: 2.8 ppm: methylene group of epoxide end group; resonance area corresponds to one H atom
11-3: 3.3 ppm: methine group of epoxide end group; resonance area corresponds to one H atom
11-4: 3.0 ppm: methylene groups of the oxazolidinone moieties; resonance area corresponds to one H atom
11-5: 4.2 ppm: methylene groups of the oxazolidinone moieties; resonance area corresponds to one H atom
11-6: 4.7 ppm: methine groups of the 5-OXA moieties; resonance area corresponds to one H atom
11-7: 4.5 ppm: methine groups of the 4-OXA moieties; resonance area corresponds to one H atom

The average number of repetition units m was calculated according to the following equation 3:

$$m = [\{(I1\text{-}4 + I1\text{-}5 + I1\text{-}6 + I1\text{-}7) - (I1\text{-}1 + I1\text{-}2 + I1\text{-}3)\} / \{2 \times (I1\text{-}4 + I1\text{-}5 + I1\text{-}6 + I1\text{-}7)\}] \quad \text{(eq. 3)}$$

The number average molecular weight $M_n$(NMR) was calculated from the average number of repetition units using the following equation 4:

$$M_n = m \times 602 \text{ g/mol} + 267 \text{ g/mol} + 73 \text{ g/mol} \quad \text{(eq. 4)}$$

The regioselectivity $R_{5\text{-}OXA}$ was calculated using the following equation 5:

$$R_{5-OXA} = \frac{\text{Integral I1 - 6}}{\text{Integral I1 - 6} + \text{Integral I1 - 7}} \quad \text{(eq. 5)}$$

Example 1: *Reaction of BADGE with 4,4 '-methylenebis(cyclohexyl isocyanate) using $PBu_4Cl$ as catalyst - Target chain length m = 100*

An autoclave (300 mL) make of Parr was charged with *$PBu_4Cl$* (7.51 mg, 0.02547 mmol) and BADGE (43.57 g, 128 mmol). The autoclave was closed and flushed with Ar for three times. The mechanical stirrer and the heater of the autoclave were switched on with set values of 800 rpm and 185 °C, respectively. 4,4'-Methylenebis(cyclohexyl isocyanate) (33.19 g, 126.7 mmol) was added slowly by a syringe pump at a constant flow rate so that all the diisocyanate was added within 30 min. After all 4,4'-methylenebis(cyclohexyl isocyanate) had been added, the reaction was carried out for another 10 min. After that the heating source was removed and stirring was stopped. The autoclave was then cooled down by immersing it into ice cold water. Within 30 min the autoclave temperature came to the room temperature. The autoclave was then opened and the product was taken out as a highly viscous liquid.

The characteristic signal for the oxazolidinone carbonyl group (1740 $cm^{-1}$) was observed in the solid state IR spectrum, while the characteristic signal of the trimer was not detected in the IR spectrum corresponding to an oxazolidinone /isocyanurate (in the following o/i) ratio of ≥ 99/1.

Regioselectivity $R_{5\text{-}OXA}$: 100 %
$M_n$ (Rheometer): 71040 g/mol.
$M_n$ (NMR): 55627 g/mol, corresponding to an average chain length m = 91
Viscosity: 78 Pa·s (at 25 °C)
$T_g$: -24 °C

Example 2: *Reaction of BADGE with 4,4'-methylenebis(cyclohexyl isocyanate) using $PBu_4Cl$ as catalyst - Target chain length m = 50*

An autoclave (300 mL) make of Parr was charged with $PBu_4Cl$ (7.47 mg, 0.02534 mmol) and BADGE (43.57 g, 128 mmol). The autoclave was closed and flushed with Ar for three times. The mechanical stirrer and the heater of the autoclave were switched on with set values of 800 rpm and 185 °C, respectively. 4,4'-Methylenebis(cyclohexyl isocyanate) (32.85 g, 125.4 mmol) was added slowly by a syringe pump at a constant flow rate so that all the diisocyanate was added within 30 min. After all 4,4'-methylenebis(cyclohexyl isocyanate) had been added, the reaction was carried out for another 10 min. After that the heating source was removed and stirring was stopped. The autoclave was then cooled down by immersing it into ice cold water. Within 30 min the autoclave temperature came to the room temperature. The autoclave was then opened and the product was taken out as a viscous liquid.

The characteristic signal for the oxazolidinone carbonyl group (1740 $cm^{-1}$) was observed in the solid state IR spectrum, while the characteristic signal of the trimer was not detected in the IR spectrum corresponding to an o/i ratio of ≥ 99/1.

Regioselectivity $R_{5\text{-}OXA}$: 98 %
$M_n$ (Rheometer): 22560 g/mol
$M_n$ (NMR): 29984 g/mol, corresponding to an average chain length m = 49
Viscosity: 55 Pa·s (at 25 °C)
$T_g$:-23 °C

Example 3: *Reaction of BADGE with 4,4'-methylenebis(cyclohexyl isocyanate) (using $PBu_4Cl$ as catalyst - Target chain length m = 20*

An autoclave (300 mL) make of Parr was charged with $PBu_4Cl$ (7.36 mg, 0.02499 mmol) and BADGE (43.57 g, 128 mmol). The autoclave was closed and flushed with Ar for three times. The mechanical stirrer and the heater of the autoclave were switched on with set values of 800 rpm and 185 °C, respectively. 4,4'-Methylenebis(cyclohexyl isocyanate) (31.93 g, 121.9 mmol) was added slowly by a syringe pump at a constant flow rate so that all the diisocyanate was added within 30 min. After all 4,4'-methylenebis(cyclohexyl isocyanate) had been added, the reaction was carried out for another 10 min. After that the heating source was removed and stirring was stopped. The autoclave was then cooled down by immersing it into ice cold water. Within 30 min the autoclave temperature came to the room temperature. The autoclave was then opened and the product was taken out as a viscous liquid.

The characteristic signal for the oxazolidinone carbonyl group (1740 $cm^{-1}$) was observed in the solid state IR spectrum, while the characteristic signal of the trimer was not detected in the IR spectrum corresponding to an o/i ratio of ≥ 99/1.

Regioselectivity $R_{5\text{-}OXA}$: 96 %
$M_n$ (Rheometer): 15640 g/mol
$M_n$ (NMR): 11992 g/mol, corresponding to an average chain length m = 19
Viscosity: 32 Pa·s (at 25 °C)
$T_g$: -30 °C

Example 4 (comparative): *Reaction of BADGE with 4,4'-methylenebis(cyclohexyl isocyanate) using $PPh_4Br$ as catalyst - Target chain length m = 100*

An autoclave (300 mL) make of Parr was charged with $PPh_4Br$ (10.67 mg, 0.02547 mmol) and BADGE (43.57 g, 128 mmol). The autoclave was closed and flushed with Ar for three times. The mechanical stirrer and the heater of the autoclave were switched on with set values of 800 rpm and 185 °C, respectively. 4,4'-Methylenebis(cyclohexyl isocyanate) (33.19 g, 126.7 mmol) was added slowly by a syringe pump at a constant flow rate so that all the diisocyanate was added within 30 min. After all 4,4'-methylenebis(cyclohexyl isocyanate) had been added, the reaction was carried out for another 10 min. After that the heating source was removed and stirring was stopped. The autoclave was then cooled down by immersing it into ice cold water. Within 30 min the autoclave temperature came to the room temperature. The autoclave was then opened and the product was taken out as a highly viscous liquid.

The characteristic signal for the oxazolidinone carbonyl group (1740 $cm^{-1}$) was observed in the solid state IR spectrum, while the characteristic signal of the trimer was not detected in the IR spectrum corresponding to an o/i ratio of ≥ 99/1.

Regioselectivity $R_{5\text{-}OXA}$: 63 %
$M_n$ (Rheometer): 65305 g/mol
$M_n$ (NMR): 61269 g/mol, corresponding to an average chain length m = 101
Viscosity: 78 Pa·s (at 25 °C)
$T_g$: -12 °C

Example 5 (comparative): *Reaction of BADGE with 4,4'-methylenebis(cyclohexyl isocyanate) using $PPh_4Br$ as catalyst - Target chain length m = 50*

An autoclave (300 mL) make of Parr was charged with $PPh_4Br$ (10.62 mg, 0.02534 mmol) and BADGE (43.57 g, 128 mmol). The autoclave was closed and flushed with Ar for three times. The mechanical stirrer and the heater of the autoclave were switched on with set values of 800 rpm and 185 °C, respectively. 4,4'-Methylenebis(cyclohexyl isocyanate) (32.85 g, 125.4 mmol) was added slowly by a syringe pump at a constant flow rate so that all the diisocyanate was added within 30 min. After all 4,4'-methylenebis(cyclohexyl isocyanate) had been added, the reaction was carried out for another 10 min. After that the heating source was removed and stirring was stopped. The autoclave was then cooled down by immersing it into ice cold water. Within 30 min the autoclave temperature came to the room temperature. The autoclave was then opened and the product was taken out as a viscous liquid.

The characteristic signal for the oxazolidinone carbonyl group (1740 $cm^{-1}$) was observed in the solid state IR spectrum, while the characteristic signal of the trimer was not detected in the IR spectrum corresponding to an o/i ratio of ≥ 99/1.

Regioselectivity $R_{5\text{-}OXA}$: 58 %

$M_n$ (Rheometer): 41263 g/mol
$M_n$ (NMR): 31522 g/mol, corresponding to an average chain length m = 52
Viscosity: 105 Pa·s (at 25 °C)
$T_g$: -18 °C

Example 6 (comparative): *Reaction of BADGE with 4,4'-methylenebis(cyclohexyl isocyanate) using $PPh_4Br$ as catalyst - Target chain length m = 20*

An autoclave (300 mL) make of Parr was charged with $PPh_4Br$ (10.47 mg, 0.02499 mmol) and BADGE (43.57 g, 128 mmol). The autoclave was closed and flushed with Ar for three times. The mechanical stirrer and the heater of the autoclave were switched on with set values of 800 rpm and 185 °C, respectively. 4,4'-Methylenebis(cyclohexyl isocyanate) (31.93 g, 121.9 mmol) was added slowly by a syringe pump at a constant flow rate so that all the diisocyanate was added within 30 min. After all 4,4'-methylenebis(cyclohexyl isocyanate) had been added, the reaction was carried out for another 10 min. After that the heating source was removed and stirring was stopped. The autoclave was then cooled down by immersing it into ice cold water. Within 30 min the autoclave temperature came to the room temperature. The autoclave was then opened and the product was taken out as a viscous liquid.

The characteristic signal for the oxazolidinone carbonyl group (1740 $cm^{-1}$) was observed in the solid state IR spectrum, while the characteristic signal of the trimer was not detected in the IR spectrum corresponding to an o/i ratio of ≥ 99/1.

Regioselectivity $R_{5\text{-}OXA}$: 52 %
$M_n$ (Rheometer): 13025 g/mol
$M_n$ (NMR): 8495 g/mol, corresponding to an average chain length m = 14
Viscosity: 81 Pa·s (at 25 °C)
$T_g$: -22 °C

Example 7 (comparison): *Reaction of BADGE with 4,4 '-methylenebis(cyclohexyl isocyanate) using $PBu_4Br$ as catalyst with semi-batch addition of the diisocyanate -Target chain length m = 20*

An autoclave (300 mL) make of Parr was charged with $PBu_4Br$ (13.26 mg, 0.02499 mmol) and BADGE (43.57 g, 128 mmol). The autoclave was closed and flushed with Ar for three times. The mechanical stirrer and the heater of the autoclave were switched on with set values of 800 rpm and 185 °C, respectively. 4,4'-Methylenebis(cyclohexyl isocyanate) (31.93 g, 121.9 mmol) was added slowly by a syringe pump at a constant flow rate so that all the diisocyanate was added within 30 min. After all 4,4'-methylenebis(cyclohexyl isocyanate) had been added, the reaction was carried out for another 10 min. After that the heating source was removed and stirring was stopped. The autoclave was then cooled down by immersing it into ice cold water. Within 30 min the autoclave temperature came to the room temperature. The autoclave was then opened and the product was taken out as a viscous liquid.

The characteristic signal for the oxazolidinone carbonyl group (1740 $cm^{-1}$) was observed in the solid state IR spectrum, while the characteristic signal of the trimer was not detected in the IR spectrum corresponding to an o/i ratio of ≥ 99/1.

Regioselectivity $R_{5\text{-}OXA}$: 42 %
$M_n$ (Rheometer): 11255 g/mol
$M_n$ (NMR): 8991 g/mol, corresponding to an average chain length m = 14
Viscosity: 57 Pa·s (at 25 °C)
$T_g$: -21 °C

Comparison

Table 1: Summary of the results obtained in examples 1 to 3 and comparative examples 4 to 7.

| Example No. | Molecular weight $M_n$ (NMR) [g/mol] | Viscosity [Pa*s] (at 25 °C) | Regioselectivity $R_{5\text{-}OXA}$ [%] | $T_g$ [°C] |
|---|---|---|---|---|
| 1 ($PBu_4Cl$; m=100) | 55627 | 78 | 100 | -24 |
| 2 ($PBu_4Cl$; m=50) | 29984 | 55 | 98 | -23 |

(continued)

| Example No. | Molecular weight $M_n$ (NMR) [g/mol] | Viscosity [Pa*s] (at 25 °C) | Regioselectivity $R_{5\text{-}OXA}$ [%] | $T_g$ [°C] |
|---|---|---|---|---|
| 3 ($PBu_4Cl$; m=20) | 11992 | 32 | 96 | -30 |
| 4 (comp.) ($PPh_4Br$; m=100) | 61269 | 78 | 63 | -12 |
| 5 (comp.) ($PPh_4Br$; m=50) | 31522 | 105 | 58 | -18 |
| 6 (comp.) ($PPh_4Br$; m=20) | 8495 | 81 | 52 | -22 |
| 7 (comp.) ($PBu_4Br$; m=20) | 8991 | 57 | 42 | -21 |
| (comp.): comparison | | | | |

A comparison of Examples 1 to 3 and with Comparison examples 4 to 7 shows that a higher molar ratio of the 5-oxazolidinone regioisomer (high regioselectivity $R_{5\text{-}OXA}$) is obtained, when catalysts according to the invention are used in the synthesis of polyoxazolidinones (Examples 1 to 3) in comparison to the use of non-inventive catalysts (Comparison examples 4 to 7). Polyoxazolidinones prepared with catalysts according to the invention are characterised by a lower viscosity (Examples 1 to 3) in comparison to polyoxazolidinones prepared with non-inventive catalysts (Comparison examples 4 to 7).

Example 8: *Reaction of BADGE with 4,4 '-methylenebis(cyclohexyl isocyanate) using $PBu_4Cl$ as catalyst - Target chain length m = 200*

An autoclave (300 mL) make of Parr was charged with $PBu_4Cl$ (7.52 mg, 0.02553 mmol) and BADGE (43.57 g, 128 mmol). The autoclave was closed and flushed with Ar for three times. The mechanical stirrer and the heater of the autoclave were switched on with set values of 800 rpm and 185 °C, respectively. 4,4'-Methylenebis(cyclohexyl isocyanate) (33.35 g, 127.3 mmol) was added slowly by a syringe pump at a constant flow rate so that all the diisocyanate was added within 30 min. After all 4,4'-methylenebis(cyclohexyl isocyanate) had been added, the reaction was carried out for another 10 min. After that the heating source was removed and stirring was stopped. The autoclave was then cooled down by immersing it into ice cold water. Within 30 min the autoclave temperature came to the room temperature. The autoclave was then opened and the product was obtained as a solid material.

The characteristic signal for the oxazolidinone carbonyl group (1740 $cm^{-1}$) was observed in the solid state IR spectrum, while the characteristic signal of the isocyanurate trimer was not detected in the IR spectrum corresponding to an oxazolidinone/isocyanurate (o/i) ratio of ≥ 99/1.

Regioselectivity $R_{5\text{-}OXA}$: 97 %
$M_n$ (NMR): 118562 g/mol, corresponding to an average chain length m =196.
The product is solid at 25°C.

Example 8 shows that also at higher molecular weights a high regioselectivity towards the 5-OXA regioisomer is achieved.

Example 9: *Reaction of BADGE with 2,4-toluenediisoyanate using $[PPh_4]_2CO_3$ as catalyst*

An autoclave (300 mL) make of Parr was charged with $[PPh_4]_2CO_3$ (342 mg, 0.46 mmol) and BADGE (15.0 g, 44.1 mmol). The autoclave was closed and flushed with argon. After addition of 40 ml of dry NMP, the mechanical stirrer and the heater of the autoclave were switched on with set values of 1000 rpm and 200 °C, respectively. A solution of 2,4-toluenediisoyanate (7.3 g, 41.97 mmol) in 60 ml dry NMP was added with an HPLC pump at a constant flow rate so that all the diisocyanate was added within 2.5 h. After an overall reaction time of 19.25 h (starting with the addition of 2,4-toluenediisoyanate), the reaction mixture was cooled down to room temperature. The reaction mixture was poured into 150 ml of methanol. The precipitate was collected by filtration and washed with methanol and with diethylether. The obtained powder was dried at $5\times10^{-2}$ mbar for 3 hours.

The characteristic signal for the oxazolidinone carbonyl group (1740 $cm^{-1}$) was observed in the IR spectrum,

while the characteristic signal of the isocyanurate trimer was not detected in the IR spectrum corresponding to an oxazolidinone/isocyanurate (o/i) ratio of ≥ 99/1.

Regioselectivity $R_{5\text{-}OXA}$: 100 %
$M_n$ (GPC): 3370 g/mol, corresponding to an average chain length m = 6.
The product is solid at 25°C.
$T_g$: 169°C

Example 10: *Reaction of BADGE with 2,4-toluenediisoyanate and para-pentylphenyl isocyanate using $[PPh_4]_2CO_3$, as catalyst*

An autoclave (300 mL) make of Parr was charged with $[PPh_4]_2CO_3$ (342 mg, 0.46 mmol) and BADGE (15.0 g, 44.1 mmol). The autoclave was closed and flushed with argon. After addition of 40 ml of dry NMP, the mechanical stirrer and the heater of the autoclave were switched on with set values of 1000 rpm and 200 °C, respectively. A solution of 2,4-toluenediisoyanate (7.3 g, 41.97 mmol) and *para*-pentylphenyl isocyanate (900 mg, 4.76 mmol) in 60 ml of a mixture of *ortho*-dichlorobenzene and NMP (volume ratio 1:5) was added with an HPLC pump at a constant flow rate so that all the isocyanate was added within 2.5 h. After an overall reaction time of 19.25 h (starting with the addition of 2,4-toluenediisoyanate), the reaction mixture was cooled down to room temperature. The reaction mixture was poured into 150 ml of methanol. The precipitate was collected by filtration and washed with methanol and with diethylether. The obtained powder was dried at $5x10^{-2}$ mbar for 3 hours.

The characteristic signal for the oxazolidinone carbonyl group (1740 $cm^{-1}$) was observed in the IR spectrum, while the characteristic signal of the isocyanurate trimer was not detected in the IR spectrum corresponding to an oxazolidinone/isocyanurate (o/i) ratio of ≥ 99/1.

Regioselectivity $R_{5\text{-}OXA}$: 100 %
$M_n$ (GPC): 4821 g/mol, corresponding to an average chain length m = 8.
The product is solid at 25°C.
$T_g$: 153°C

Examples 9 and 10 show that a high regioselectivity towards the 5-oxazolidinone regioisomer ($R_{5\text{-}OXA}$) is obtained when $[PPh_4]_2CO_3$ is used as catalyst.
A comparison of inventive Examples 1 to 3 and 8 with inventive Examples 9 to 10 shows that different isocyanates can be used in the synthesis of polyoxazolidinones according to the invention.

## Claims

1. A method for the production of polyoxazolidinone compounds, comprising the step of reacting an isocyanate compound with an epoxide compound in the presence of a catalyst, **characterized in that** the catalyst having the general formula (I)

$$[E(R1)(R2)(R3)(R4)]^{+}_{n}X^{n-} \qquad (I)$$

wherein

E is a P, As, Sb and/or Bi,
n is 1, 2 or 3

in the case of n = 1, $X^-$ is $F^-$, $Cl^-$, $OH^-$, $CH_3CO_2^-$, $NO_2^-$, $NO_3^-$, $ClO^-$, $ClO_2^-$, $ClO_3^-$, $ClO_4^-$, $OR^-$, wherein R is a linear or branched alkyl group comprising 1 to 22 carbon atoms, a cycloaliphatic group comprising 3 to 22 carbon atoms or an aryl group comprising 6 to 18 carbon atoms, $N_3^-$, $NH_2^-$ and/or $SCN^-$,
in the case of n = 2, $X^{2-}$ is $SO_4^{2-}$, $CO_3^{2-}$ and/or $S_2O_3^{2-}$,
in the case of n = 3, $X^{3-}$ is $PO_4^{3-}$,

(R1), (R2), (R3), (R4) are independently of one another selected from the group comprising linear or branched alkyl groups comprising 1 to 22 carbon atoms, optionally substituted with heteroatoms and/or heteroatom comprising substituents, cycloaliphatic groups comprising 3 to 22 carbon atoms, optionally substituted with heteroatoms and/or heteroatom comprising substituents, C1 to C3 alkyl-bridged cycloaliphatic groups comprising 3

to 22 carbon atoms, optionally substituted with heteroatoms and/or heteroatom containing substituents and aryl groups comprising 6 to 18 carbon atoms, optionally substituted with alkyl groups comprising 1 to 10 carbon atoms and/or heteroatoms.

**2.** Method according to claim 1, wherein the method comprises the step of reacting a diisocyante compound with a diepoxide compound.

**3.** The method according to claim 1 or 2, wherein

E is P or Sb,
n is 1 or 2,

in the case of n = 1, $X^-$ is $Cl^-$, $NO_3^-$
in the case of n = 2, $X^{2-}$ is $CO_3^{2-}$.

**4.** The method according to one or more of claims 1 to 3, wherein (R1), (R2), (R3), (R4) are independently of one another selected from the group comprising phenyl, cyclohexyl and/or linear or branched alkyl groups containing 1 to 6 carbon atoms.

**5.** The method according to one or more of claims 1 to 3, wherein (R1), (R2), (R3), (R4) are equal and selected from the group comprising linear or branched alkyl groups comprising 1 to 22 carbon atoms, optionally substituted with heteroatoms and/or heteroatom comprising substituents cycloaliphatic groups comprising 3 to 22 carbon atoms, optionally substituted with heteroatoms and/or heteroatom comprising substituents, C1 to C3 alkyl-bridged cycloaliphatic groups comprising 3 to 22 carbon atoms, optionally substituted with heteroatoms and/or heteroatom comprising substituents and aryl groups comprising 6 to 18 carbon atoms, optionally substituted with alkyl groups comprising 1 to 10 carbon atoms and/or heteroatoms.

**6.** The method according to claim 5, wherein (R1), (R2), (R3), (R4) are selected from the group comprising phenyl, cyclohexyl and/or linear or branched alkyl groups comprising 1 to 6 carbon atoms.

**7.** The method according to one or more of claims 1 to 6, wherein E is P, n = 1 and $X^-$ is $Cl^-$.

**8.** The method according to one or more of claims 1 to 7, wherein the isocyanate compound is added to the epoxide compound in a continuous or step-wise manner with two or more individual addition steps in the step-wise addition, wherein in each individual addition step the amount of isocyanate compound added is $\leq$ 50 weight-% of the total amount of isocyanate compound to be added.

**9.** The method according to one or more of claims 1 to 8, wherein the reaction is conducted at a temperature of $\geq$ 140 °C to $\leq$ 300 °C.

**10.** The method according to one or more of claims 1 to 9, wherein the isocyanate compound is selected from the group comprising tetramethylene diisocyanate, hexamethylene diisocyanate (HDI), 2-methylpentamethylene diisocyanate, 2,2,4-trimethyl-hexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate, IPDI), diisocyanatodicyclohexylmethane ($H_{12}$-MDI), 4,4'-diisocyanato-3,3'-dimethyl-dicyclohexylmethane, 4,4'-diisocyanato-2,2-dicyclohexylpropane, poly(hexamethylene diisocyanate), octamethylene diisocyanate, tolylene-$\alpha$,4-diisocyanate, poly(propylene glycol) tolylene-2,4-diisocyanate terminated, poly(ethylene adipate) tolylene-2,4-diisocyanate terminated, 2,4,6-trimethyl-1,3-phenylene diisocyanate, 4-chloro-6-methyl-1,3-phenylene diisocyanate, poly[1,4-phenylene diisocyanate-co-poly(1,4-butanediol)] diisocyanate, poly(tetrafluoroethylene oxide-co-difluoromethylene oxide) $\alpha,\omega$-diisocyanate, 1,4-diisocyanatobutane, 1,8-diisocyanatooctane, 1,3-bis(1-isocyanato-1-methylethyl)benzene, 3,3'-dimethyl-4,4'-biphenylene diisocyanate, naphthalene-1,5-diisocyanate, 1,3-phenylene diisocyanate, 1,4-diisocyanatobenzene, 2,4- or 2,5- or 2,6-diisocyanatotoluene (TDI) or mixtures of these isomers, 4,4'-, 2,4'- or 2,2'-diisocyanatodiphenylmethane (MDI) or mixtures of these isomers, 4,4'-, 2,4'- or 2,2'-diisocyanato-2,2-diphenylpropane-p-xylene diisocyanate and $\alpha,\alpha,\alpha',\alpha'$-tetramethyl- m- or - p-xylene diisocyanate (TMXDI), mixtures thereof or biurets, isocyanurates, carbamates or uretdiones of the aforementioned isocyanates.

**11.** The method according to one or more of claims 1 to 10, wherein the epoxide compound is selected from the group butadiene diepoxide, vinylcyclohexene diepoxide, limonene diepoxide, the diepoxides of double unsaturated fatty

acid C1 - C18 alkyl esters, ethylene glycol diglycidyl ether, diethylene glycol diglycidyl ether, poly(ethylene glycol) diglycidyl ether, propylene glycol diglycidyl ether, dipropylene glycol diglycidyl ether, poly(propylene glycol) diglycidyl ether, neopentyl glycol diglycidyl ether, polybutadiene diglycidyl ether, 1,6-hexanediol diglycidyl ether, hydrogenated bisphenol-A diglycidyl ether, 1,2-dihydroxybenzene diglycidyl ether, resorcinol diglycidyl ether, 1,4-dihydroxybenzene diglycidyl ether, bisphenol-A diglycidyl ether,diglycidyl ethers of polybutadiene - bisphenol-A - block-copolymers, diglycidyl o-phthalate, diglycidyl isophthalate, diglycidyl terephthalate.

**12.** The method according to one or more of claims 1 to 11, wherein the reaction is conducted with a molar ratio of the epoxide groups to the isocyanate groups of 0.5 to 1.5.

**13.** A polyoxazolidinone compound obtainable by a method according to one or more of claims 1 to 12.

**14.** A polyoxazolidinone compound according to claim 13, with the molar ratio of the 5-substituted 1,3-oxazolidin-2-one regioisomer to the 4-substituted 1,3-oxazolidin-2-one regioisomer of $\geq$ 85/15.

**15.** Use of a catalyst having the general formula (I)

$$[E(R1)(R2)(R3)(R4)]^{+}{}_{n}X^{n-} \quad (I)$$

wherein

E is a P, As, Sb and/or Bi,
n is 1, 2 or 3

in the case of n = 1, $X^-$ is $F^-$, $Cl^-$, $OH^-$, $CH_3CO_2^-$, $NO_2^-$, $NO_3^-$, $ClO^-$, $ClO_2^-$, $ClO_3^-$, $ClO_4^-$, $OR^-$, wherein R is a linear or branched alkyl group comprising 1 to 22 carbon atoms, a cycloaliphatic group comprising 3 to 22 carbon atoms or an aryl group comprising 6 to 18 carbon atoms, $N_3^-$, $NH_2^-$ and/or $SCN^-$,
in the case of n = 2, $X^{2-}$ is $SO_4^{2-}$, $CO_3^{2-}$ and/or $S_2O_3^{2-}$,
in the case of n = 3, $X^{3-}$ is $PO_4^{3-}$,

(R1), (R2), (R3), (R4) are independently of one another selected from the group comprising linear or branched alkyl groups comprising 1 to 22 carbon atoms, optionally substituted with heteroatoms and/or heteroatom comprising substituents, cycloaliphatic groups comprising 3 to 22 carbon atoms, optionally substituted with heteroatoms and/or heteroatom comprising substituents, C1 to C3 alkyl-bridged cycloaliphatic groups comprising 3 to 22 carbon atoms, optionally substituted with heteroatoms and/or heteroatom containing substituents and aryl groups comprising 6 to 18 carbon atoms, optionally substituted with alkyl groups comprising 1 to 10 carbon atoms and/or heteroatoms,
in the reaction of diisocyanates with diepoxides to form oligomeric and/or polymeric oxazolidinone compounds.

## Patentansprüche

**1.** Verfahren zur Herstellung von Polyoxazolidinonverbindungen, das den Schritt des Umsetzens einer Isocyanatverbindung mit einer Epoxidverbindung in Gegenwart eines Katalysators umfasst, **dadurch gekennzeichnet, dass** der Katalysator die allgemeine Formel (I)

$$[E (R1) (R2) (R3) (R4)]^{+}n\ X^{n-} \quad (I)$$

aufweist, wobei

E für P, As, Sb und/oder Bi steht,
n für 1, 2 oder 3 steht,

im Fall von n = 1 $X^-$ für $F^-$, $Cl^-$, $OH^-$, $CH_3CO_2^-$, $NO_2^-$, $NO_3^-$, $C10^-$, $ClO_2^-$, $ClO_3^-$, $ClO_4^-$, $OR^-$, wobei R für eine lineare oder verzweigte Alkylgruppe mit 1 bis 22 Kohlenstoffatomen, eine cycloaliphatischen Gruppe mit 3 bis 22 Kohlenstoffatomen oder eine Arylgruppe mit 6 bis 18 Kohlenstoffatomen steht, $N_3^-$, $NH_2^-$und/oder $SCN^-$ steht,
im Fall von n = 2 $X^{2-}$ für $SO_4^{2-}$, $CO_3^{2-}$ und/oder $S_2O_3^{2-}$ steht,

im Fall von n = 3 $X^{3-}$ für $PO_4^{3-}$ steht,

(R1), (R2), (R3), (R4) unabhängig voneinander aus der Gruppe umfassend lineare oder verzweigte Alkylgruppen mit 1 bis 22 Kohlenstoffatomen, die gegebenenfalls durch Heteroatome und/oder heteroatomhaltige Substituenten substituiert sind, cycloaliphatische Gruppen mit 3 bis 22 Kohlenstoffatomen, die gegebenenfalls durch Heteroatome und/oder heteroatomhaltige Substituenten substituiert sind, C1- bis C3-alkylverbrückte cycloaliphatische Gruppen mit 3 bis 22 Kohlenstoffatomen, die gegebenenfalls durch Heteroatome und/oder heteroatomhaltige Substituenten substituiert sind, und Arylgruppen mit 6 bis 18 Kohlenstoffatomen, die gegebenenfalls durch Alkylgruppen mit 1 bis 10 Kohlenstoffatomen und/oder Heteroatome substituiert sind, ausgewählt sind.

**2.** Verfahren nach Anspruch 1, bei dem das Verfahren den Schritt des Umsetzens einer Diisocyanatverbindung mit einer Diepoxidverbindung umfasst.

**3.** Verfahren nach Anspruch 1 oder 2, bei dem

E für P oder Sb steht,
n für 1 oder 2 steht,

im Fall von n = 1 $X^-$ für $Cl^-$, $NO_3^-$ steht,
im Fall von n = 2 $X^{2-}$ für $CO_3^{2-}$ steht.

**4.** Verfahren nach einem oder mehreren der Ansprüche 1 bis 3, bei dem (R1), (R2), (R3), (R4) unabhängig voneinander aus der Gruppe umfassend Phenyl, Cyclohexyl und/oder lineare oder verzweigte Alkylgruppen mit 1 bis 6 Kohlenstoffatomen ausgewählt sind.

**5.** Verfahren nach einem oder mehreren der Ansprüche 1 bis 3, bei dem (R1), (R2), (R3), (R4) gleich sind und aus der Gruppe umfassend lineare oder verzweigte Alkylgruppen mit 1 bis 22 Kohlenstoffatomen, die gegebenenfalls durch Heteroatome und/oder heteroatomhaltige Substituenten substituiert sind, cycloaliphatische Gruppen mit 3 bis 22 Kohlenstoffatomen, die gegebenenfalls durch Heteroatome und/oder heteroatomhaltige Substituenten substituiert sind, C1- bis C3-alkyl-verbrückte cycloaliphatische Gruppen mit 3 bis 22 Kohlenstoffatomen, die gegebenenfalls durch Heteroatome und/oder heteroatomhaltige Substituenten substituiert sind, und Arylgruppen mit 6 bis 18 Kohlenstoffatomen, die gegebenenfalls durch Alkylgruppen mit 1 bis 10 Kohlenstoffatomen und/oder Heteroatome substituiert sind, ausgewählt sind.

**6.** Verfahren nach Anspruch 5, bei dem (R1), (R2), (R3), (R4) aus der Gruppe umfassend Phenyl, Cyclohexyl und/oder linearen oder verzweigten Alkylgruppen mit 1 bis 6 Kohlenstoffatomen ausgewählt sind.

**7.** Verfahren nach einem oder mehreren der Ansprüche 1 bis 6, bei dem E für P steht, n = 1 und $X^-$ für $Cl^-$steht.

**8.** Verfahren nach einem oder mehreren der Ansprüche 1 bis 7, bei dem man die Isocyanatverbindung kontinuierlich oder schrittweise zu der Epoxidverbindung gibt, wobei die schrittweise Zugabe zwei oder mehr einzelne Zugabeschritte umfasst, wobei bei jedem einzelnen Zugabeschritt die zugegebene Menge an Isocyanatverbindung $\leq$ 50 Gew.-% der zuzugebenden Gesamtmenge an Isocyanatverbindung ist.

**9.** Verfahren nach einem oder mehreren der Ansprüche 1 bis 8, bei dem man die Umsetzung bei einer Temperatur $\geq$ 140 °C bis $\leq$ 300 °C durchführt.

**10.** Verfahren nach einem oder mehreren der Ansprüche 1 bis 9, bei dem man die Isocyanatverbindung aus der Gruppe umfassend Tetramethylendiisocyanat, Hexamethylendiisocyanat (HDI), 2-Methylpentamethylendiisocyanat, 2,2,4-Trimethylhexamethylendiisocyanat (THDI), Dodecanmethylendiisocyanat, 1,4-Diisocyanatocyclohexan, 3-Isocyanatomethyl-3,3,5-trimethylcyclohexylisocyanat (Isophorondiisocyanat, IPDI), Diisocyanatodicyclohexylmethan ($H_{12}$-MDI), 4,4'-Diisocyanato-3,3'-dimethyldicyclohexyl-methan, 4,4'-Diisocyanato-2,2-dicyclohexylpropan, Poly(hexamethylendiisocyanat), Octamethylendiisocyanat, Tolylen-$\alpha$,4-diisocyanat, mit Tolylen-2,4-diisocyanat terminiertes Poly(propylenglykol), mit Tolylen-2,4-diisocyanat terminiertes Poly(ethylen-adipat), 2,4,6-Trimethyl-1,3-phenylendiisocyanat, 4-Chlor-6-methyl-1,3-phenylendiisocyanat, Poly-[1,4-phenylendiisocyanat-co-poly(1,4-butandiol)]-diisocyanat, Poly(tetrafluorethylenoxid-co-di-fluormethylenoxid)-$\alpha$,$\omega$-diisocyanat, 1,4-Diisocyanatobutan, 1,8-Diisocyanatooctan, 1,3-Bis(1-isocyanato-1-methylethyl)benzol, 3,3'-Dimethyl-4,4'-biphenylendiisocyanat, Naphthalin-1,5-diisocyanat, 1,3-Phenylendiisocyanat, 1,4-Diisocyanatobenzol, 2,4- oder 2,5- oder 2,6-Diisocyanatotoluol

(TDI) oder Gemische dieser Isomere, 4,4'-, 2,4'- oder 2,2'-Diisocyanatodiphenylmethan (MDI) oder Gemische dieser Isomere, 4,4'-, 2,4'- oder 2,2'-Diisocyanato-2,2-diphenylpropan-p-xyloldiisocyanat und $\alpha,\alpha,\alpha',\alpha'$-Tetramethyl-m- oder -p-xyloldiisocyanat (TMXDI), Gemische davon oder Biurete, Isocyanurate, Carbamate oder Uretdione der oben genannten Isocyanate auswählt.

**11.** Verfahren nach einem oder mehreren der Ansprüche 1 bis 10, bei dem man die Epoxidverbindung aus der Gruppe umfassend Butadiendiepoxid, Vinylcyclohexendiepoxid, Limonendiepoxid, die Diepoxide von doppelt ungesättigten Fettsäure-C1-C18-alkylestern, Ethylenglykoldiglycidylether, Diethylenglykoldiglycidylether, Poly(ethylenglykol)diglycidylether, Propylenglykoldiglycidylether, Dipropylenglykoldiglycidylether, Poly-(propylenglykol)diglycidylether, Neopentylglykoldiglycidylether, Polybutadiendiglycidylether, 1,6-Hexandioldiglycidylether, hydrierten Bisphenol-A-diglycidylether, 1,2-Dihydroxybenzoldiglycidylether, Resorcinoldiglycidylether, 1,4-Dihydroxybenzoldiglycidylether, Bisphenol-A-diglycidylether, Diglycidylether von Polybutadien-Bisphenol-A-Blockcopolymeren, Diglycidyl-o-phthalat, Diglycidylisophthalat und Diglycidylterephthalat auswählt.

**12.** Verfahren nach einem oder mehreren der Ansprüche 1 bis 11, bei dem man die Umsetzung mit einem Molverhältnis von Epoxidgruppen zu Isocyanatgruppen von 0,5 bis 1,5 durchführt.

**13.** Polyoxazolidinonverbindung, die durch ein Verfahren nach einem oder mehreren der Ansprüche 1 bis 12 erhältlich ist.

**14.** Polyoxazolidinonverbindung nach Anspruch 13, wobei das Molverhältnis von 5-substituiertem 1,3-Oxazolidin-2-on-Regioisomer zu 4-substituiertem 1,3-Oxazolidin-2-on-Regioisomer $\geq$ 85/15 ist.

**15.** Verwendung eines Katalysators mit der allgemeinen Formel (I)

$$[E(R1)(R2)(R3)(R4)]^{+}nX^{n-} \qquad (I),$$

wobei

E für P, As, Sb und/oder Bi steht,
n für 1, 2 oder 3 steht,

im Fall von n = 1 $X^-$ für $F^-$, $Cl^-$, $OH^-$, $CH_3CO_2^-$, $NO_2^-$, $NO_3^-$, $C10^-$, $ClO_2^-$, $ClO_3^-$, $ClO_4^-$, $OR^-$, wobei R für eine lineare oder verzweigte Alkylgruppe mit 1 bis 22 Kohlenstoffatomen, eine cycloaliphatische Gruppe mit 3 bis 22 Kohlenstoffatomen oder eine Arylgruppe mit 6 bis 18 Kohlenstoffatomen steht, $N_3^-$, $NH_2^-$und/oder $SCN^-$ steht,
im Fall von n = 2 $X^{2-}$ für $SO_4^{2-}$, $CO_3^{2-}$ und/oder $S_2O_3^{2-}$ steht,
im Fall von n = 3 $X^{3-}$ für $PO_4^{3-}$ steht,

(R1), (R2), (R3), (R4) unabhängig voneinander aus der Gruppe umfassend lineare oder verzweigte Alkylgruppen mit 1 bis 22 Kohlenstoffatomen, die gegebenenfalls durch Heteroatome und/oder heteroatomhaltige Substituenten substituiert sind, cycloaliphatische Gruppen mit 3 bis 22 Kohlenstoffatomen, die gegebenenfalls durch Heteroatome und/oder heteroatomhaltige Substituenten substituiert sind, C1- bis C3-alkylverbrückte cycloaliphatische Gruppen mit 3 bis 22 Kohlenstoffatomen, die gegebenenfalls durch Heteroatome und/oder heteroatomhaltige Substituenten substituiert sind, und Arylgruppen mit 6 bis 18 Kohlenstoffatomen, die gegebenenfalls durch Alkylgruppen mit 1 bis 10 Kohlenstoffatomen und/oder Heteroatome substituiert sind, ausgewählt sind, bei der Umsetzung von Diisocyanaten mit Diepoxiden zu oligomeren und/oder polymeren Oxazolidinonverbindungen.

## Revendications

**1.** Méthode de production de composés de polyoxazolidinone, comprenant l'étape consistant à réagir un composé d'isocyanate avec un composé d'époxyde en présence d'un catalyseur, **caractérisée en ce que** le catalyseur répond à la formule générale (I) :

$$[E(R1)(R2)(R3)(R4)]^{+}{}_{n}X^{n-} \qquad (I)$$

où

E est P, As, Sb et/ou Bi,
n vaut 1, 2 ou 3,

lorsque n=1, $X^-$ est $F^-$, $Cl^-$, $OH^-$, $CR_3CO_2^-$, $NO_2^-$, $NO_3^-$, $C10^-$, $ClO_2^-$, $ClO_3^-$, $ClO_4^-$, OR- où R est un groupement alkyle linéaire ou ramifié comprenant de 1 à 22 atomes de carbone, un groupement cycloaliphatique comprenant de 3 à 22 atomes de carbone ou un groupement aryle comprenant de 6 à 18 atomes de carbone, $N_3^-$, $NH_2^-$ et/ou $SCN^-$ ;
lorsque n=2, $X^{2-}$ est $SO_4^{2-}$, $CO_3^{2-}$ et/ou $S_2O_3^{2-}$ ;
lorsque n=3, $X^{3-}$ est $PO_4^{3-}$ ;

(R1), (R2), (R3), (R4) sont, indépendamment les uns des autres, choisis dans le groupe constitué par des groupements alkyle linéaires ou ramifiés comprenant de 1 à 22 atomes de carbone, éventuellement substitués par des hétéroatomes et/ou des substituants comprenant des hétéroatomes, des groupements cycloaliphatiques comprenant de 3 à 22 atomes de carbone, éventuellement substitués par des hétéroatomes et/ou des substituants comprenant des hétéroatomes, des groupements cycloaliphatiques pontés par alkyle en C1 à C3 comprenant de 3 à 22 atomes de carbone, éventuellement substitués par des hétéroatomes et/ou des substituants contenant des hétéroatomes et des groupements aryle comprenant de 6 à 18 atomes de carbone, éventuellement substitués par des groupements alkyle comprenant de 1 à 10 atomes de carbone et/ou hétéroatomes.

**2.** Méthode selon la revendication 1, où la méthode comprend l'étape consistant à réagir un composé de diisocyanate avec un composé de diépoxyde.

**3.** Méthode selon la revendication 1 ou 2, dans laquelle

E est P ou Sb,
n est 1 ou 2,

lorsque n=1, $X^-$ est $Cl^-$, $NO_3^-$,
lorsque n=2, $X^{2-}$ est $CO_3^{2-}$.

**4.** Méthode selon l'une ou plusieurs parmi les revendications 1 à 3, dans laquelle (R1), (R2), (R3), (R4) sont, indépendamment les uns des autres, choisis dans le groupe constitué par phényle, cyclohexyle et/ou des groupements alkyle linéaires ou ramifiés contenant de 1 à 6 atomes de carbone.

**5.** Méthode selon l'une ou plusieurs parmi les revendications 1 à 3, dans laquelle (R1), (R2), (R3), (R4) sont identiques et choisis dans le groupe constitué par des groupements alkyle linéaires ou ramifiés comprenant de 1 à 22 atomes de carbone, éventuellement substitués par des hétéroatomes et/ou des substituants comprenant des hétéroatomes, des groupements cycloaliphatiques comprenant de 3 à 22 atomes de carbone, éventuellement substitués par des hétéroatomes et/ou des substituants comprenant des hétéroatomes, des groupements cycloaliphatiques pontés par alkyle en C1 à C3 comprenant de 3 à 22 atomes de carbone, éventuellement substitués par des hétéroatomes et/ou des substituants comprenant des hétéroatomes et des groupements aryle comprenant de 6 à 18 atomes de carbone, éventuellement substitués par des groupements alkyle comprenant de 1 à 10 atomes de carbone et/ou hétéroatomes.

**6.** Méthode selon la revendication 5, dans laquelle (R1), (R2), (R3), (R4) sont choisis dans le groupe constitué par phényle, cyclohexyle et/ou des groupements alkyle linéaires ou ramifiés comprenant de 1 à 6 atomes de carbone.

**7.** Méthode selon l'une ou plusieurs parmi les revendications 1 à 6, dans laquelle E est P, n=1 et $X^-$est $Cl^-$.

**8.** Méthode selon l'une ou plusieurs parmi les revendications 1 à 7, dans laquelle le composé d'isocyanate est ajouté au composé d'époxyde de manière continue ou par étapes, avec deux, ou plus, étapes d'addition individuelles dans l'addition par étapes, où dans chaque étape d'addition individuelle, la quantité de composé d'isocyanate ajoutée est ≤50% en poids de la quantité totale du composé d'isocyanate devant être ajoutée.

**9.** Méthode selon l'une ou plusieurs parmi les revendications 1 à 8, dans laquelle la réaction est effectuée à une température allant de ≥140°C à ≤300°C.

**10.** Méthode selon l'une ou plusieurs parmi les revendications 1 à 9, dans laquelle le composé d'isocyanate est choisi

dans le groupe constitué par le diisocyanate de tétraméthylène, le diisocyanate d'hexaméthylène (HDI), le diisocyanate de 2-méthyl-pentaméthylène, le diisocyanate de 2,2,4-triméthyl-hexaméthylène (THDI), le diisocyanate de dodécane-méthylène, le 1,4-diisocyanatocyclohexane, l'isocyanate de 3-isocyanatométhyl-3,3,5-triméthylcyclohexyle (diisocyanate d'isophorone, IPDI), le diisocyanatodicyclohexylméthane ($H_{12}$-MDI), le 4,4'-diisocyanato-3,3'-diméthyldicyclohexylméthane, le 4,4'-diisocyanato-2,2-dicyclonexylpropane, le poly(diisocyanate d'hexaméthylène), le diisocyanate d'octaméthylène, le tolylène-$\alpha$,4-diisocyanate, le poly(propylène glycol) à terminaison tolylène-2,4-diisocyanate, le poly(adipate d'éthylène) à terminaison tolylène-2,4-diisocyanate, le diisocyanate de 2,4,6-triméthyl-1,3-phénylène, le diisocyanate de 4-chloro-6-méthyl-1,3-phénylène, le diisocyanate de poly[diisocyanate de 1,4-phénylène-co-poly(1,4-butanediol)], l'$\alpha,\omega$-diisocyanate de poly(oxyde de tétrafluoroéthylène-co-oxyde de difluorométhylène), le 1,4-diisocyanatobutane, le 1,8-diisocyanatooctane, le 1,3-bis(1-isocyanato-1-méthyléthyl)benzène, le diisocyanate de 3,3'-diméthyl-4,4'-biphénylène, le naphtalène-1,5-diisocyanate, le diisocyanate de 1,3-phénylène, le 1,4-diisocyanatobenzène, le 2,4- ou 2,5- ou 2,6-diisocyanatotoluène (TDI) ou des mélanges de ces isomères, le 4,4'-, 2,4 ou 2,2'-diisocyanatodiphényl-méthane (MDI) ou des mélanges de ces isomères, le diisocyanate de 4,4'-, 2,4'- ou 2,2'-diisocyanato-2,2-diphénylpropane-p-xylène et le diisocyanate d'$\alpha,\alpha,\alpha',\alpha'$-tétraméthyl-m- ou -p-xylène (TMXDI), des mélanges de ceux-ci, ou des biurets, isocyanurates, carbamates ou uretdiones des isocyanates susmentionnés.

**11.** Méthode selon l'une ou plusieurs parmi les revendications 1 à 10, dans laquelle le composé d'époxyde est choisi dans le groupe constitué par le diépoxyde de butadiène, le diépoxyde de vinylcyclohexène, le diépoxyde de limonène, les diépoxydes de C1-C18-alkylesters d'acides gras à double insaturation, l'éther diglycidylique d'éthylène glycol, l'éther diglycidylique de diéthylène glycol, l'éther diglycidylique de poly(éthylène glycol), l'éther diglycidylique de propylène glycol, l'éther diglycidylique de dipropylène glycol, l'éther diglycidylique de poly(propylène glycol), l'éther diglycidylique de néopentyl glycol, l'éther diglycidylique de polybutadiène, l'éther diglycidylique de 1,6-hexanediol, l'éther diglycidylique de bisphénol-A hydrogéné, l'éther diglycidylique de 1,2-dihydroxybenzène, l'éther diglycidylique de résorcinol, l'éther diglycidylique de 1,4-dihydroxybenzène, l'éther diglycidylique de bisphénol-A, les éthers diglycidyliques de copolymères blocs de polybutadiène-bisphénol-A, l'o-phtalate de diglycidyle, l'isophtalate de diglycidyle et le téréphtalate de diglycidyle.

**12.** Méthode selon l'une ou plusieurs parmi les revendications 1 à 11, dans laquelle la réaction est effectuée avec un rapport molaire des groupements époxyde aux groupements isocyanate allant de 0,5 à 1,5.

**13.** Composé de polyoxazolidinone pouvant être obtenu par une méthode selon l'une ou plusieurs parmi les revendications 1 à 12.

**14.** Composé de polyoxazolidinone selon la revendication 13, avec un rapport molaire du régioisomère de 1,3-oxazolidin-2-one 5-substituée au régioisomère de 1,3-oxazolidin-2-one 4-substituée $\geq$85/15.

**15.** Utilisation d'un catalyseur répondant à la formule générale (I)

$$[E(R1)(R2)(R3)(R4)]^{+}_{n}X^{n-} \qquad (I)$$

où

E est P, As, Sb et/ou Bi,
n vaut 1, 2 ou 3,

lorsque n=1, $X^-$ est $F^-$, $Cl^-$, $OH^-$, $CR_3CO_2^-$, $NO_2^-$, $NO_3^-$, $C10^-$, $ClO_2^-$, $ClO_3^-$, $ClO_4^-$, $OR^-$ où R est un groupement alkyle linéaire ou ramifié comprenant de 1 à 22 atomes de carbone, un groupement cycloaliphatique comprenant de 3 à 22 atomes de carbone ou un groupement aryle comprenant de 6 à 18 atomes de carbone, $N_3^-$, $NH_2^-$ et/ou $SCN^-$ ;
lorsque n=2, $X^{2-}$ est $SO_4^{2-}$, $CO_3^{2-}$ et/ou $S_2O_3^{2-}$ ;
lorsque n=3, $X^{3-}$ est $PO_4^{3-}$ ;

(R1) (R2), (R3), (R4) sont, indépendamment les uns des autres, choisis dans le groupe constitué par des groupements alkyle linéaires ou ramifiés comprenant de 1 à 22 atomes de carbone, éventuellement substitués par des hétéroatomes et/ou des substituants comprenant des hétéroatomes, des groupements cycloaliphatiques comprenant de 3 à 22 atomes de carbone, éventuellement substitués par des hétéroatomes et/ou des substituants comprenant des hétéroatomes, des groupements cycloaliphatiques pontés par alkyle en C1 à C3 comprenant de 3 à 22 atomes de carbone, éventuellement substitués par des hétéroatomes et/ou des substituants contenant des hétéroatomes et des groupements aryle comprenant de 6 à 18 atomes de carbone, éventuellement substitués par des groupements alkyle comprenant de 1 à 10 atomes de carbone et/ou hétéroatomes, dans la réaction de diisocyanates avec des diépoxydes, afin de former des composés d'oxazolidinone oligomères et/ou polymères.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3471442 A
- WO 8606734 A
- US 2010227090 A
- US 3020262 A
- WO 8606734 A1
- US 20120214958 A1
- EP 12192611 A


### Non-patent literature cited in the description


- **H.-Y. WU ; J.-C. DING ; Y.-K. LIU.** *J. Indian Chem. Soc.,* 2003, vol. 80, 36
- **M. FUJIWARA ; A. BABA ; Y. TOMOHISA ; HARUO MATSUDA.** *Chem. Lett.,* 1986, 1963-1966
- **M. T. BARROS.** *Tetrahedron: Asymmetry,* 2010, vol. 21, 2746
- **ROBERT G. PARR ; RALPH G. PEARSON.** *J. Am. Chem. Soc.,* 1983, vol. 105, 7512-7516